# EUROPEAN PATENT APPLICATION

(11) **EP 2 090 980 A1**
(43) Date of publication of application: **19.08.2009**
(21) Application number: 09151820.9
(22) Date of filing: 30.01.2009
(51) Int. Cl.: G06F 9/445

(54) **Method circuit and system for interfacing with an electronic device**

(30) Priority: 17.02.2008 US 32677
(71) Applicant: Emblaze Mobile Ltd., 43662 Industrial Area Ra'anana (IL)
(72) Inventor: Reifman, Eli, 43662 Ra'anana (IL)
(74) Representative: Shaw, Matthew Nigel

(57) **Abstract**

According to some embodiments of the present invention, there is provided an interface apparatus for a multi-application electronic device, including a human interface surface having integrated presentation and sensing elements, such that the device has substantially full functionality for substantially all applications without the use of other human interfaces.

## Description

### Field of the Invention

The present invention generally relates to the field of electronics. More specifically, the present invention relates to a method circuit and system for facilitating human interface with electronic devices such as mobile devices, cell phones, Personal Digital Assistants ("PDA"), digital cameras, or any integrated combination of electronic devices.

### Background

In recent decades, electronic technology, including communication technology, has revolutionized our everyday lives. Electronic devices such as PDA's, cell phones, mobile media players and digital cameras have permeated the lives of almost every person living in the developed world - and quite a number of people living in undeveloped countries. Mobile communication and computing devices, especially, have become the means by which countless millions conduct their personal and professional interactions with the world. It has become almost impossible for many people, especially those in the business world, who use these devices as a means to improve productivity, to function without access to their electronic devices.

However, with this tremendous proliferation in the use of electronic devices, there has developed a tradeoff between enhanced productivity and simplicity or convenience. With people's ever growing dependence on electronic device such as cell phones and PDA's, comes a need for users of these devices to carry more and more such devices. The necessity to carry multiple devices often leads to problems such as: (1) easy misplacement or loss of devices, (2) conflicting data residing on one or more devices, and (3) general inconvenience associated with having to store and carry objects.

Manufacturers of electronic devices have recognized some of the issues stemming from the need to carry multiple devices, and have attempted to integrate two or more such devices into a single package or integrated device. The solutions to date, however, have been clumsy and have failed to provided favorable results. One of the major problems associated with integrating multiple devices into one package relates to the fact that each type of device (e.g. cell phone, PDA etc.) usually has a unique human interface to which people have become accustomed and which they associate with the given device type. While attempting to integrate multiple devices into a single package, manufacturers have thus far been unable to find a means by which to seamlessly incorporate the various human interfaces associated with each of the devices such that both functionally and appearance are maintained.

Thus, there is a need for an improved method, apparatus and system by which multiple devices may be integrated into one package.

### Summary of the Invention

The present invention is a method, apparatus and system for resource management on a multifunction/application electronic device. According to some embodiments of the present invention, there is provided a multifunction electronic device comprising a device profile manager, adapted to control which of the device's components and/or elements are active at a given time. The components/elements may be integrated into single modules or may be separate modules functionally associated with the electronic device.

According to further embodiments of the present invention, there is provided a controller adapted to send one or more signals to the components/elements of the device based at least partially on data stored in a device profile table and based on a current state of the device. The current state of the device may be determined based on one or more signals received from the sensing elements and/or based on one or more signals received from the device.

According to some embodiments of the present invention, the controller may associate a set of one or more components/elements with a device profile. According to further embodiments of the present invention, upon activating a device profile the controller may power off components/elements not specified as required for the profile.

According to some embodiments of the present invention, the profile manager may allow selection between installed profiles. According to alternative embodiments of the present invention, a profile may be loaded to the device an activated during manufacturing.

### Brief Description of the Drawings

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
FIG. 1A shows a prospective view with a cutaway of a mobile device having an interface surface according to some embodiments of the present invention;
FIG. 1B shows a prospective view of a mobile device having an interface surface according to some embodiments of the present invention, wherein the device is configured to operate as a mobile phone;
FIG. 1C shows a prospective view of a mobile device having an interface surface according to some embodiments of the present invention, wherein the device is configured to operate as a media player;
FIG. 1D shows a prospective view of a mobile device having an interface surface according to some embodiments of the present invention, wherein the device is configured to operate as a digital personal organizer;
FIG. 2 shows a block diagram of an exemplary mobile device according to some embodiments of the present invention, including an interface surface and various electrical functional blocks to drive and interact the interface surface;
FIG. 3 shows a block diagram of an exemplary data structure of a configuration database according to some embodiments of the present invention;
FIG. 4A shows a flow diagram including the step of an exemplary method of installing operational software on a mobile device according to some embodiments of the present invention;
FIG. 4B shows a flow diagram including the step of an exemplary method of updating, upgrading or adding a device profile on a mobile device according to some embodiments of the present invention;
FIG. 4C shows a flow diagram including the step of an exemplary method of installing operational software on a mobile device according to some embodiments of the present invention
FIG. 5A shows a flow diagram including the step of an exemplary method of initializing a mobile device according to some embodiments of the present invention; and
FIG. 5B shows a flow diagram including the step of an exemplary method of changing an active device profile on a mobile device according to some embodiments of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### Detailed Description

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

Unless specifically stated otherwise, as apparent from the following discussions, it is appreciated that throughout the specification discussions utilizing terms such as "processing", "computing", "calculating", "determining", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

The present invention is a method, apparatus and system for resource management on a multifunction/application electronic device. According to some embodiments of the present invention, there is provided a multifunction electronic device comprising a device profile manager, adapted to control which of the device's components and/or elements are active at a given time. The components/elements may be integrated into single modules or may be separate modules functionally associated with the electronic device.

According to further embodiments of the present invention, there is provided a controller adapted to send one or more signals to the components/elements of the device based at least partially on data stored in a device profile table and based on a current state of the device. The current state of the device may be determined based on one or more signals received from the sensing elements and/or based on one or more signals received from the device.

According to some embodiments of the present invention, the controller may associate a set of one or more components/elements with a device profile. According to further embodiments of the present invention, upon activating a device profile the controller may power off components/elements not specified as required for the profile.

According to some embodiments of the present invention, the profile manager may allow selection between installed profiles. According to alternative embodiments of the present invention, a profile may be loaded to the device an activated during manufacturing.

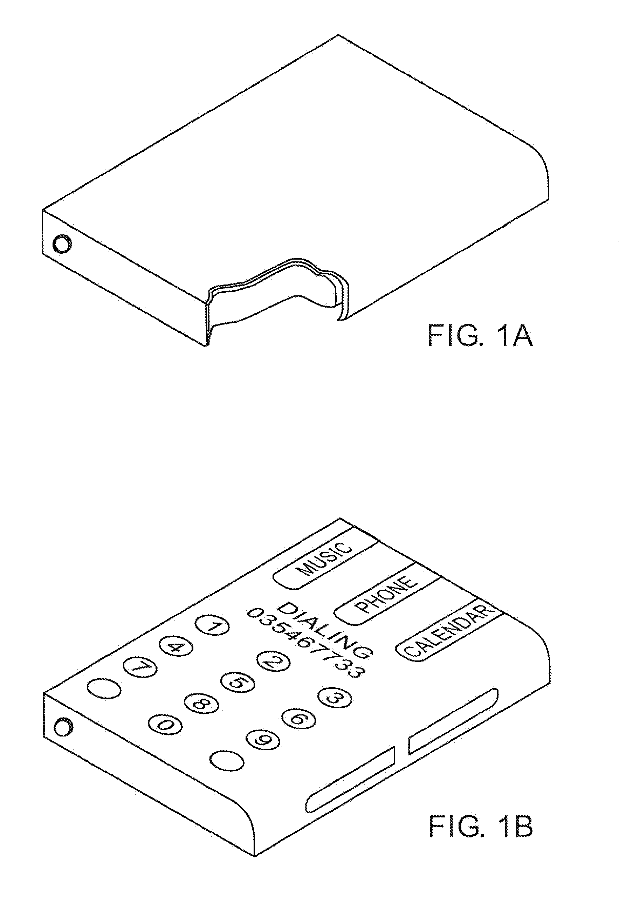

Turning now to FIG. 1A, there is shown a prospective view with a cutaway of a mobile device operating under a device profile according to some embodiments of the present invention.

Turning now to FIG. 1B, there is shown a prospective view of a mobile device operating under a device profile according to some embodiments of the present invention, wherein the device is configured to operate as a mobile phone.

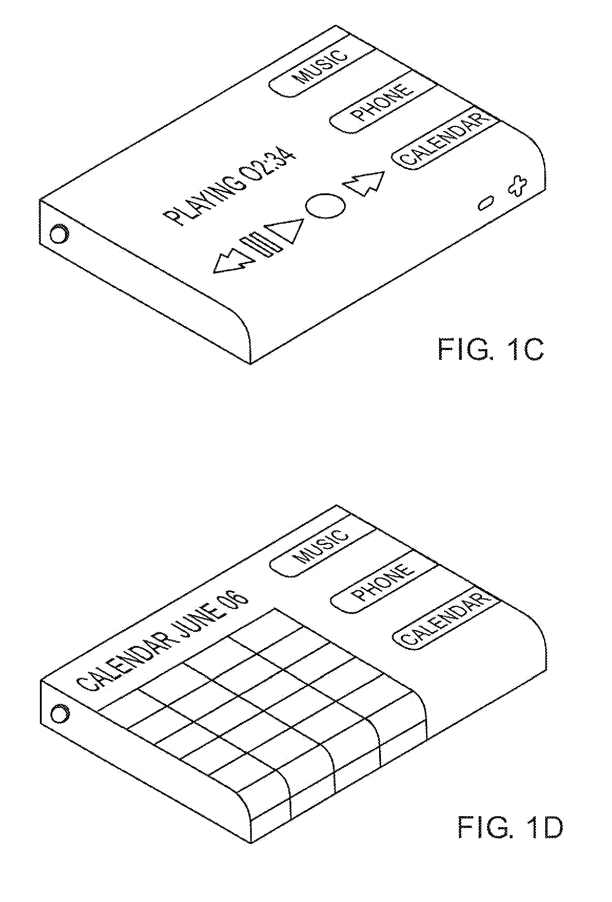

Turning now to FIG. 1C, there is shown a prospective view of a mobile device operating under a device profile according to some embodiments of the present invention, wherein the device is configured to operate as a media player.

Turning now to FIG. 1D, there is shown a prospective view of a mobile device operating under a device profile according to some embodiments of the present invention, wherein the device is configured to operate as a digital personal organizer.

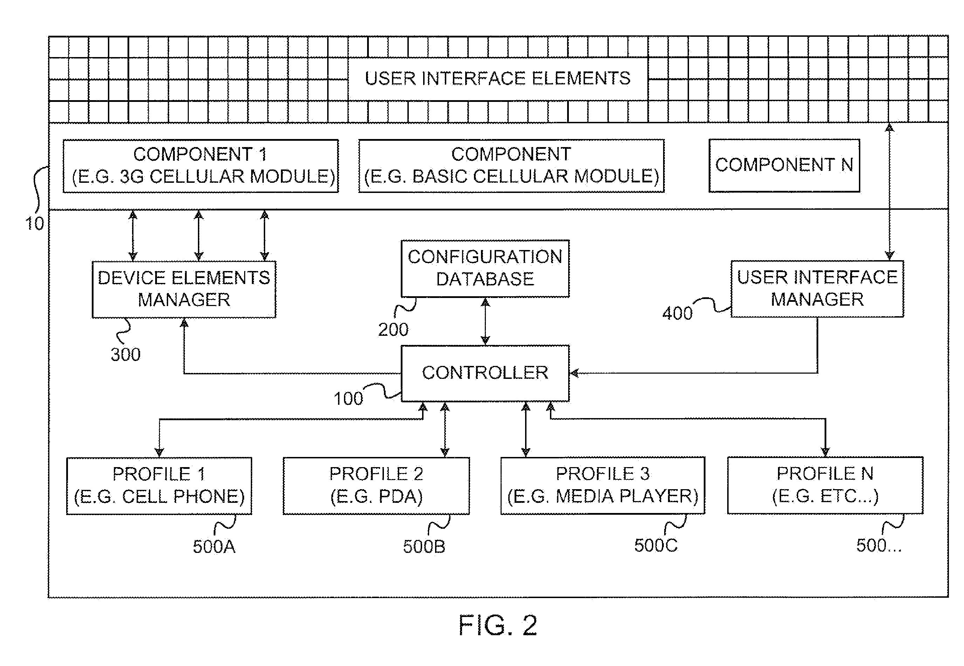

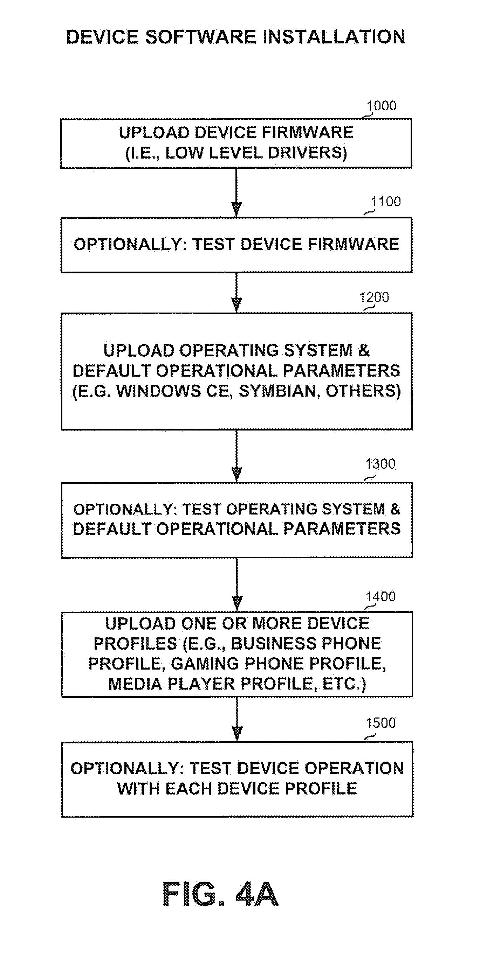

Turning now to FIG. 2, there is shown a block diagram of an exemplary mobile device according to some embodiments of the present invention, including a user interface, various components and various electrical functional blocks to drive and control those components. The functionality of the device 10 shown in FIG. 2 will be described in view of the flow charts of FIGs 4A through 5B and using the prospective views of FIGs 1A through 1D.

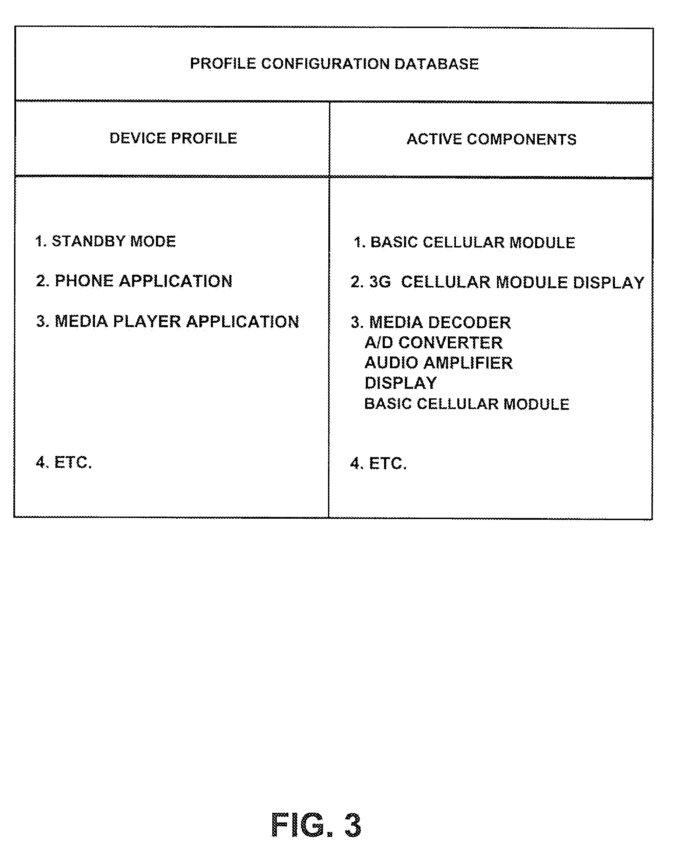

A profile configuration database 200 may include information used by the controller 100 in regulating signal flow to the device element manager 300. As shown in FIG. 3, the configuration database 200 may include such information as active components required by each of the device profiles 500A through 500N configured on the device.

Turning now to FIG. 4A, which is a flow diagram including the step of an exemplary method of installing operational software on a mobile device according to some embodiments of the present invention. Step 1000 corresponds to the initial setup of the device hardware, such as installing the basic firmware and device drivers required by the following steps. After installation, the device may, optionally, be tested (step 1100). The next steps may be installation (step 1200) and testing (step 1300) of the device's operating system and default operational parameters. After that, the device may be ready for the configuration (step 1400) and testing of the device profiles (step 1500).

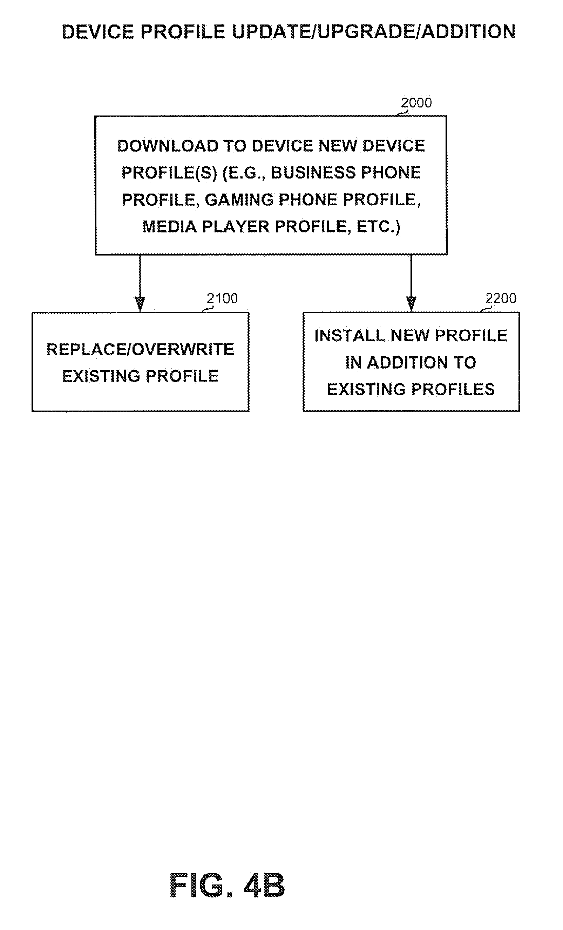

Turning now to FIG. 4B, which is a flow diagram including the step of an exemplary method of updating, upgrading, or adding a device profile according to some embodiments of the present invention. According to some embodiments of the present invention, the user may download a new profile to the device (step 2000). The new device profile may define a new use, in which case it may be installed as an additional profile (step 2200), or it may be an update of an existing profile, in which case it may replace the existing profile (step 2100), or be stored alongside it (step 2200).

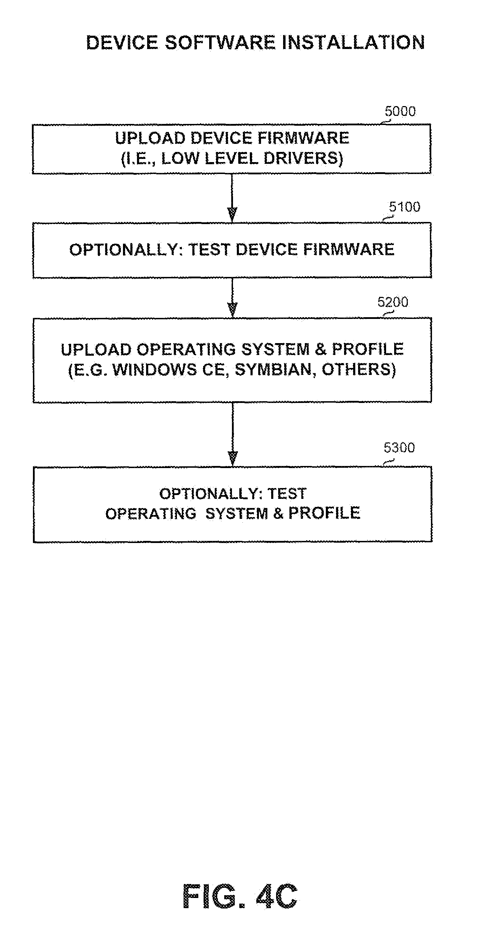

Turning now to FIG. 4C, which is a flow diagram including the step of an exemplary method of installing operational software on a mobile device according to some embodiments of the present invention. Step 5000 corresponds to the initial setup of the device hardware, such as installing the basic firmware and device drivers required by the following steps. After installation, the device may, optionally, be tested (step 5100). The next steps may be installation of the device's operating system and device profile (step 5200) optionally followed by testing (step 5300) of the device's active features.

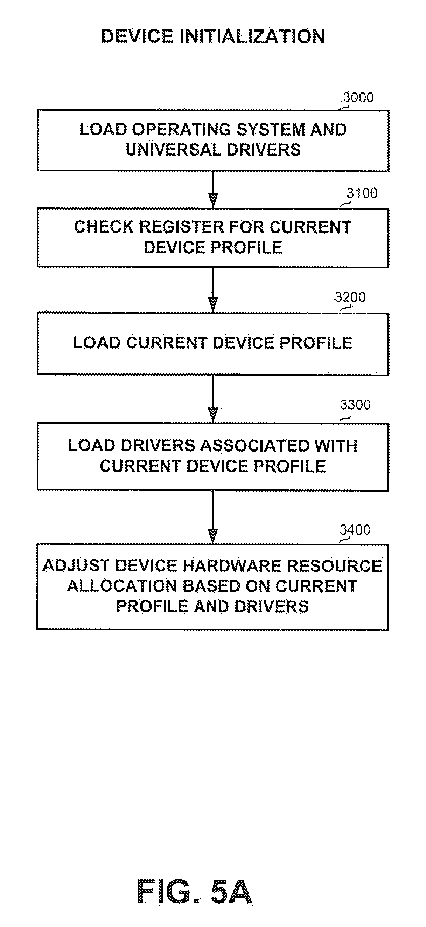

Reference is now made to FIG. 5A, which shows a flow diagram including the step of an exemplary method of initializing a mobile device according to some embodiments of the present invention. According to some embodiments of the present invention, the firmware may start by loading the operating system and universal drivers, i.e. drivers for components which are required by all profiles and should be operational while the device it operational (step 3000). The controller 100 may then check which device profile is active (step 3100), and load it (step 3200). After loading the profile, the controller 100 may instruct the operating system to load drivers for the components associated with the active profile (step 3300). After loading the required drivers, the operating system and loaded drivers may adjust hardware resources, e.g. configure operating mode of components, power off components not required by the active profile, or perform any other hardware-related configuration (step 3400).

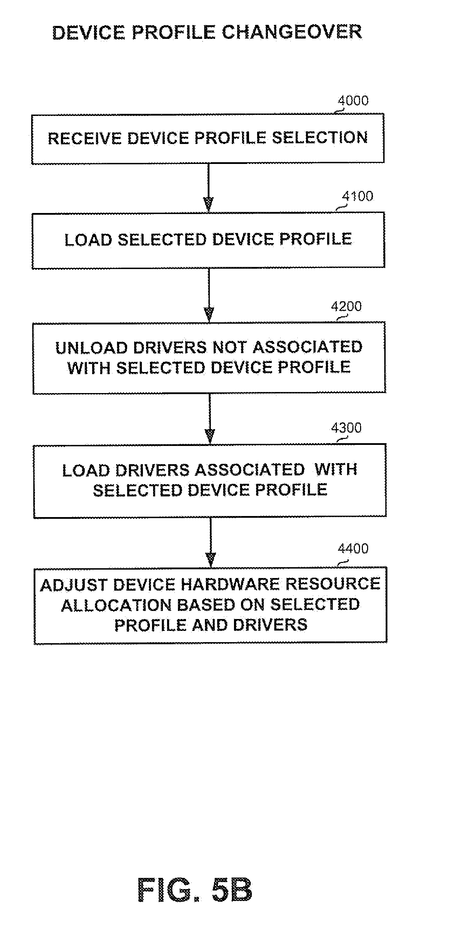

Reference is now made to FIG. 5B, which shows a flow diagram including the step of an exemplary method of changing an active device profile on a mobile device according to some embodiments of the present invention. According to some embodiments of the present invention, the controller 100 may receive a device profile selection (step 4000). The selection may be initiated directly by the user, the result of an external event (e.g. incoming call when the active device profile is not phone), or any other configured trigger. The controller may then load the selected device profile (step 4100), and following that unload unrequired drivers (step 4200) and load required ones (step 4300). After the driver configuration steps, the controller may adjust hardware resources, e.g. configure operating mode of components, power off components not required by the active profile, or perform any other hardware-related configuration (step 4400).

While certain features of the invention have been illustrated and described herein, many modifications, substitutions, changes, and equivalents will now occur to those skilled in the art. It is, therefore, to be understood that the appended claims are intended to cover all such modifications and changes as fall within the true spirit of the invention.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A multi-application electronic device, comprising:
a device elements manager adapted to manage one or more components of the device in accordance with an active device profile, wherein the active device profile includes one or more driver identifiers and/or driver parameters for the one or more components.

2. The device according to claim 1 or claim 2, wherein said element manager is adapted to update a driver associated with device component selected from the group consisting of data communications module, voice (GSM) communications module and graphics drive circuits.

3. The device according to claim 1, wherein a device component is associated with at least one device subsystem selected from the group consisting of cell-phone subsystem, a digital personal organizer subsystem, a media playing subsystem.

4. A method of operating an electronic device comprising:
managing one or more components of the device in accordance with an active device profile, wherein the active device profile includes one or more driver identifiers and/or driver parameters for the one or more components.

5. The method according to claim 4, further comprising updating a driver associated with device component selected from the group consisting of data communications module, voice (GSM) communications module and graphics drive circuits.

6. The method according to claim 4 or claim 5, wherein a device component is associated with at least one device subsystem selected from the group consisting of cell-phone subsystem, a digital personal organizer subsystem, a media playing subsystem.
